# EUROPEAN PATENT APPLICATION

(11) **EP 1 398 890 A1**
(43) Date of publication of application: **17.03.2004**
(21) Application number: 03743570.8
(22) Date of filing: 04.03.2003
(51) Int. Cl.: H04B 7/10

(54) **RADIO BASE STATION APPARATUS AND RADIO TRANSMITTING METHOD**

(30) Priority: 07.03.2002 JP 2002062129
(71) Applicant: MATSUSHITA ELECTRIC INDUSTRIAL CO., LTD., Kadoma-shi, Osaka 571-8501 (JP)
(72) Inventor: AOYAMA, Takahisa, Yokohama-shi, Kanagawa 233-0007 (JP); MIYOSHI, Kenichi, Yokohama-shi, Kanagawa 236-0058 (JP)
(74) Representative: Grünecker, Kinkeldey, Stockmair & Schwanhäusser Anwaltssozietät
(86) International application number: PCT/JP2003/002457
(87) International publication number: WO 2003/075487

(57) **Abstract**

Directivity control is executed during transmission such that the directivity pattern of the S-CPICH (Secondary Common Pilot Channel) and the directivity pattern of the DSCH (Downlink Shared Channel) are oriented in different directions. That is, the directivity pattern of a known signal is made oriented in a different directions than the directivity pattern of packet data. As a result, interference between the S-CPICH and the DSCH is restrained, so as to make a communication terminal apparatus capable of accurate channel quality detection. At a base station, based on the result of this channel quality detection, the priority of a data packet transmitted by the DSCH is determined.

## Description

### Technical Field

The present invention relates to a wireless base station apparatus and a wireless transmission method, and more particularly, to a technology that executes high speed packet transmission by combining directional transmission and scheduling.

### Background Art

A scheme called HSDPA (High Speed Downlink Packet Access) has been subject to discussion, which is a packet transmission scheme that is directed to implementing increased peak transmission speed on the downlink, low transmission delay, and high throughput. Moreover, schemes that support HSDPA are proposed in TR25.848, "Physical layer aspects of UTRA High Speed Downlink Packet Access," and in TR 25.211, "Physical channels and mapping of transport channels onto physical channels (FDD)" by 3GPP (3rd Generation Partnership Project).

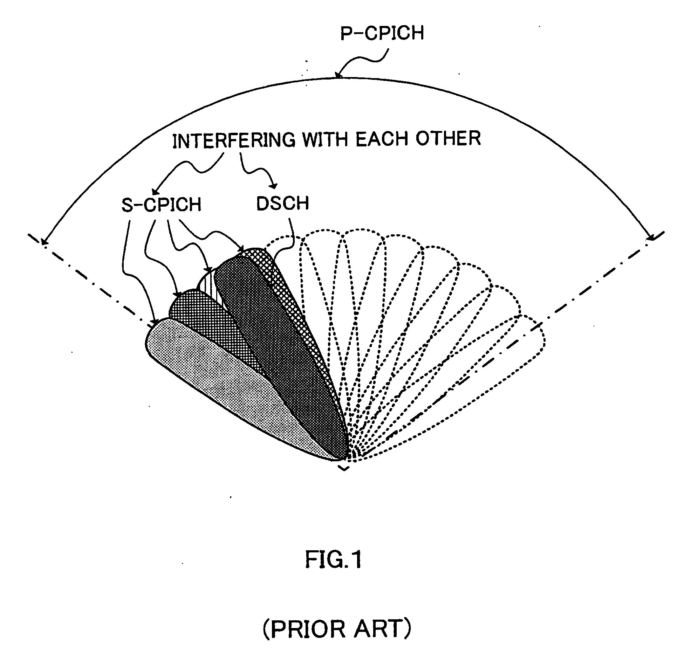

Generally, when executing packet transmission, a wireless base station apparatus transmits the P-CPICH (Primary Common Pilot Channel) on a per sector basis, as shown in FIG.1. Then, the wireless base station apparatus BS receives channel quality information (e.g., CIR) from communication terminals, measured upon reception of the P-CPICH at the communication terminals.

The wireless base station apparatus adaptively assigns modulation schemes and coding rates to transmission data according to each communication terminal's channel quality, thereby executing what is referred to as AMC (Adaptive Modulation and Coding). By this means, it is possible to increase the level of data transmission to each communication terminal at low error rates of received data at each communication terminal.

Moreover, the wireless base station apparatus determines priority in transmitting packet data based on the channel quality at respective communication terminals. To be more specific, scheduling is performed such that communication terminals of high channel quality are given high priority, and packet data is transmitted in order from those high priority communication terminals. By combining this with AMC processing, it is possible to transmit still a larger level of data while maintaining excellent error rate characteristics.

In addition, by applying directional transmission such as adaptive array antenna (hereinafter "AAA") technology, even when the transmission power of the DSCH (Downlink Shared Channel) for data packet transmission in increased, it is still possible to minimize interference elements against other communication terminals not subject to transmission and thus enable high speed packet transmission of even more excellent error rate characteristics.

However, high speed packet transmission with directivity by means of AAA technology and the P-CPICH for nondirectional transmission may differ in channel quality. For this reason, there is a possibility that when packet transmission is scheduled or adaptive modulation/ adaptive coding is performed based on the channel quality detected using the P-CPICH, it may not be possible to schedule packet transmission and perform adaptive modulation/adaptive coding adequately. In such case, problems might occur such as increased number of retransmissions and decreased data transmission rates.

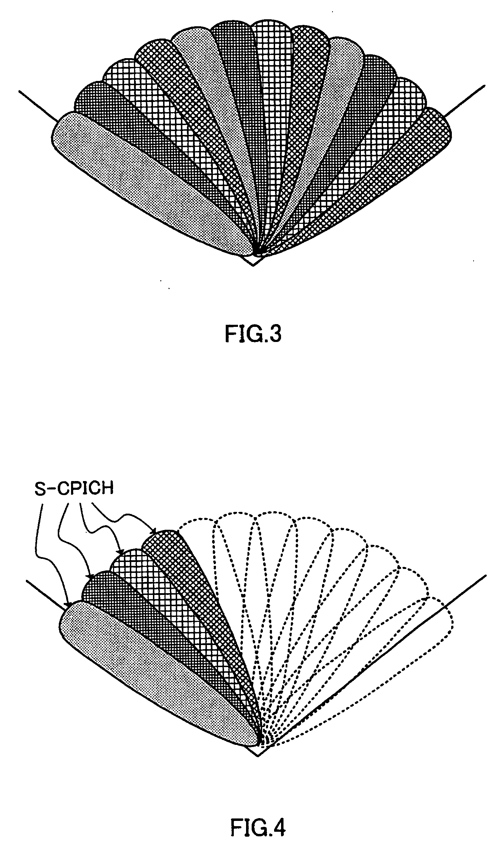

In view of this, when using AAA technology, it may be possible to use the S-CPICH (Secondary CPICH) that is capable of directional transmission. However, when the S-CPICH is directionally transmitted, it is difficult to transmit the S-CPICH in all directions as shown in FIG.3., due to the limit on the number of spread codes and the problem of interference. So, generally, as shown in FIG.1, the S-CPICH is transmitted only in specific directions at a given time and the transmission direction is shifted with time.

Then, considering that the S-CPICH interferes greatly with those terminals that lie in directions where the S-CPICH is transmitted and interferes little with those terminals that lie in other directions, the level of interference may vary depending on locations and directions in the cell.

### Disclosure of Invention

It is therefore an object of the preset invention to provide a wireless base station apparatus and a wireless transmission method that detect channel quality at each communication terminal accurately, determine adequate transmission priority of data packets based on accurate channel quality information, and thus perform high speed packet transmission at elevated transmission rates.

The present inventors assume that, when high speed packet transmission is performed with directivity, the S-CPICH (Secondary Common Pilot Channel), which is capable of directional transmission as is the DSCH, is used to detect channel quality at each communication terminal, rather than using the non-directional P-CPICH. According to HSDPA schemes, this S-CPICH is a channel that is provided in advance to detect channel quality at each communication terminal. By using this S-CPICH, it is possible to accurately detect channel quality of when directional transmission is performed by means of the DSCH, thereby enabling adequate scheduling of the DSCH.

Still, there are cases where, even when the channel quality of the DSCH is predicted using the S-CPICH, accurate channel quality cannot be predicted. That is, as shown in FIG.1, when the directivity pattern of the S-CPICH and the directivity pattern of the DSCH overlap, the S-CPICH suffers interference from the DSCH, and the reception performance deteriorates. The present inventors have focused on this point, come up with the idea of minimizing deterioration in the reception performance of the DSCH, and arrived at the present invention.

It is therefore a feature of the present invention to control the directivity pattern of known signals and the directivity pattern of packet data such that the directivity pattern of the known signals (i.e., S-CPICH) and the directivity pattern of the packet data (i.e., DSCH) are oriented in different directions, and, when they interfere with each other, take the level of channel deterioration due to interference into account.

### Brief Description of Drawings

FIG.1 is a drawing illustrating the P-CPICH, S-CPICH, and DSCH;
FIG.2 is a block diagram showing a configuration of a wireless base station apparatus according the first embodiment of the present invention;
FIG.3 is a drawing showing directivity in a sector according to an embodiment;
FIG.4 is a drawing showing a directivity pattern of the S-CPICH at a given time;
FIG.5 is a drawing showing a directivity pattern of the S-CPICH at a different time;
FIG.6 is a drawing illustrating an operation of an embodiment;
FIG.7 is a drawing illustrating an operation of an embodiment;
FIG.8 is a drawing illustrating a shuffling of priorities;
FIG.9 is a block diagram showing a configuration of a wireless base station apparatus according to a second embodiment;
FIG.10 is a drawing showing relationship between directivity pattern and directivity gain attenuation angle;
FIG.11 is a block diagram showing a simplified configuration of a wireless base station apparatus according to a third embodiment;
FIG.12 is a drawing illustrating grouping of directivity patterns according to a fourth embodiment;
FIG.13 is a block diagram showing a simplified configuration of a wireless base station apparatus according to a fourth embodiment;
FIG.14 is a block diagram showing a configuration of a wireless base station apparatus according to a fifth embodiment;
FIG.15 is a drawing illustrating reordering of priorities after CIR correction according to a fifth embodiment; and
FIG.16 is a drawing illustrating reordering of priorities after CIR correction according to a fifth embodiment.

### Best Mode for Carrying Out the Invention

With reference to the accompanying drawings now, embodiments of the present invention will be described in detail.

### (First Embodiment)

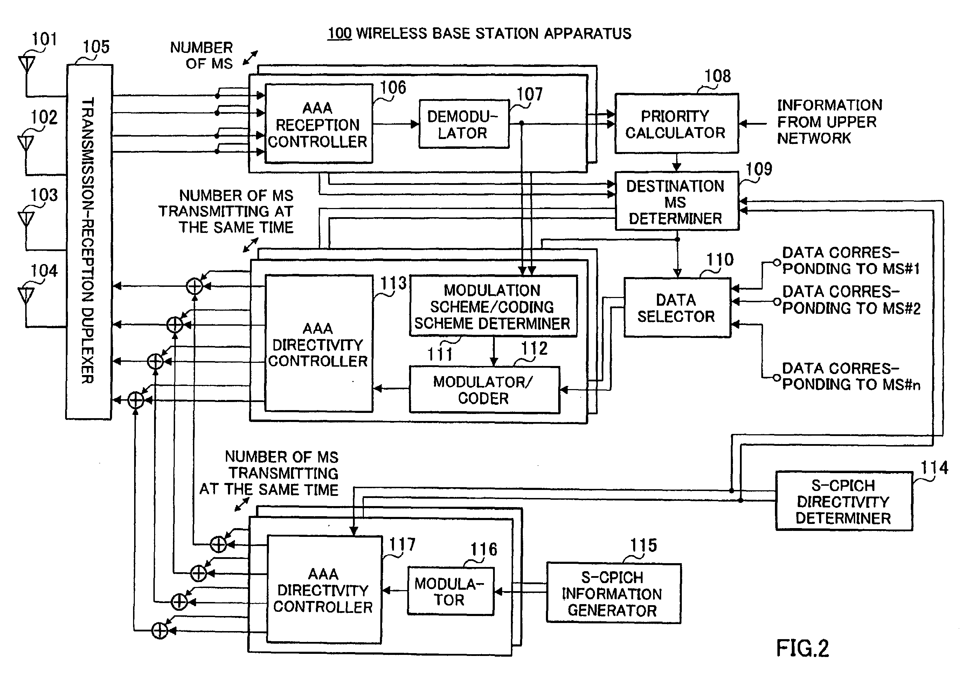

Referring to FIG.2, 100 shows an overall configuration of a wireless base station apparatus according to the first embodiment of the present invention. Wireless base station apparatus 100 has antenna elements 101-104 that constitute an array antenna, transmission-reception duplexer 105, AAA (Adaptive Array Antenna) reception controller 106, demodulator 107, priority calculator 108, and destination MS determiner 109. In addition, wireless base station apparatus 100 has data selector 110, modulation scheme/coding scheme determiner 111, modulator-coder 112, and AAA directivity controller 113. Furthermore, wireless base station apparatus 100 has S-CPICH directivity determiner 114, S-CPICH information generator 115, modulator 116, and AAA directivity controller 117. AAA reception controller 106, demodulator 107, AAA directivity controller 113, modulation scheme/coding scheme determiner 111, modulator-coder 112, modulator 116, and AAA directivity controller 117 are each provided in the number of communication terminals (MS) that wireless base station apparatus 100 is capable of communicating with simultaneously.

Transmission-reception duplexer 105 performs frequency conversion processing and amplification processing of signals received by antenna elements 101-104, and outputs the results to AAA reception controllers 106. Moreover, transmission-reception duplexer 105 performs frequency conversion processing and amplification processing of the signals output from the adders respectively corresponding to antenna elements 101-104, and transmits the results by wireless from antenna elements 101-104.

Each AAA reception controller 106 despreads the output signal from transmission-reception duplexer 105 using the spread code in accord with the communication terminal, performs arrival direction estimation processing of the received signal based on the despread signal, calculates the received weight, and array-combines the despread signal. Then, AAA reception controller 106 outputs the combined signal to demodulator 107 and outputs information that indicates the arrival direction of the signal to destination MS determiner 109.

Demodulator 107 demodulates the data of the signal array combined in AAA reception controller 106. Demodulator 107 then separates from the demodulated signal information that indicates the channel quality of the downlink channels, including, for instance, the CIR report value, and outputs this to priority calculator 108 and modulation scheme/coding scheme determiner 111.

Priority calculator 108 calculates each communication terminal's transmission priority based on the information indicating the channel quality of the downlink channels. Communication terminals having higher downlink channel quality will have higher priority. Then, priority calculator 108 outputs information that indicates the calculated priorities to destination MS determiner 109. Incidentally, priority calculator 108, upon the calculation of priority, takes information from upper network such as RNC (Radio Network Controller) into account. For instance, if such user information is obtained from upper network that a high fee is being paid, processing is performed to heighten the priority of the communication terminal.

Destination MS determiner 109 estimates each communication terminal's direction from information indicating the arrival directions of the signals, and, based on the present directions and priorities of the respective communication terminals, determines the order of the communication terminals to which high speed downlink packet transmission is going to be performed. This is called scheduling.

In addition, destination MS determiner 109 receives a directivity determining signal from S-CPICH directivity determiner 114 and changes the order of the communication terminals to which high speed downlink packet transmission is going to be performed in such a way that the directivity pattern of the S-CPICH and the directivity pattern of the DSCH are oriented in different directions. By this means, interference between the S-CPICH and the DSCH decreases in the cell processed under base station apparatus 100, and, at each communication terminal, the channel quality can be obtained in a highly accurate manner. As a result, the report values transmitted to wireless base station apparatus 100 from the communication terminals reflect the channel quality well, so that it is possible to do the scheduling that reflects the channel quality well at improved transmission rates.

Destination MS determiner 109 outputs information that indicates a determined communication terminal apparatus to data selector 110 and modulation scheme/coding scheme determiner 111. Moreover, destination MS determiner 109 outputs information that indicates the arrival direction of the signal transmitted from the determined communication terminal to AAA directivity controller 113. Incidentally, the specifics of the scheduling in destination MS determiner 109 will be later explained.

In accordance with the determination in destination MS determiner 109, data selector 110 selects only the transmission data of the corresponding communication terminal and outputs the data to modulator-encoder 112. Modulation scheme/coding scheme determiner 111 determines the modulation scheme and the coding scheme for the data subject to downlink high speed packet transmission based on the information indicating the channel quality of the downlink channels. For instance, when the channel quality of the downlink channels is good, high rate modulation schemes such as 16QAM and 64QAM are used at increased coding rates, while, when the channel quality of the downlink channels is poor, low rate modulation schemes such as QPSK are used at decreased coding rates. Then, modulation scheme/coding scheme determiner 111 specifies the modulation scheme and coding scheme to modulator-coder 112.

Modulator-coder 112 modulates and encodes an output signal from data selector 110 by the modulation scheme and coding scheme specified by modulation scheme/coding scheme selector 111 and thereafter despreads it. Modulator-coder 112 outputs the despread signal to AAA directivity controller 113. The number of data that can be put to high speed downlink packet transmission is predetermined based on the number of spreading codes and such.

AAA directivity controller 113 calculates a transmission weight based on the arrival direction of the signal transmitted from the communication terminal determined by destination MS determiner 109. AAA directivity controller 113 multiplies the transmission weight and the transmission signal, and thereby generates the transmission signals that are going to be transmitted from antenna elements 101-104 and outputs them to the adders. Incidentally, the spreading processing for spreading the transmission signal can be either before or after the transmission weight multiplication.

Of the signals that are output from AAA directivity controller 113 to be transmitted to the communication terminals, the adders, in order from the top down, respectively add the signals corresponding to antenna elements 101, 102, 103, and 104, and outputs the results to transmission-reception duplexer 105.

S-CPICH information generator 115 generates a known signal that is going to be transmitted in the S-CPICH, and the generated known signal is modulated and spread by modulator 116 and thereafter sent to AAA directivity controller 117. AAA directivity controller 117 performs weight multiplication processing of the modulated and spread signal in such a way that the directivity of the S-CPICH turns into the directivity pattern determined by S-CPICH directivity determiner 114.

At the adders provided in the number of the antennas, the weight-multiplied signal is added to the S-CPICH signals for other communication terminals provided with directivity likewise, on a per element basis corresponding to antenna 101-104. The added signal is then added to the DSCH signals formed by AAA directivity controller 113 on a per element basis corresponding to antenna 101-104.

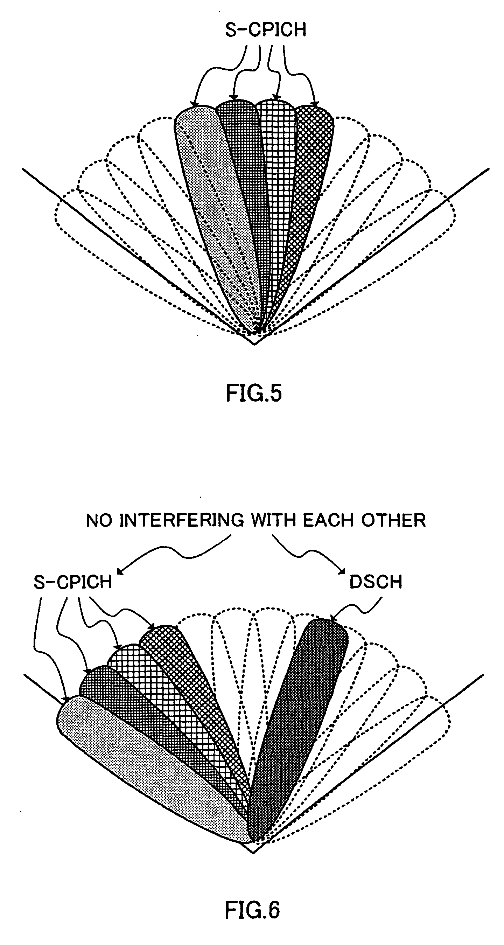

As shown in FIG.3, AAA directivity controllers 113 and 117 of wireless base station apparatus 100 are configured to formulate twelve directivities per sector. Similarly, AAA reception controller 106 is configured to directionally receive signals via directivity patterns such as shown in FIG.3. Moreover, according to this embodiment, as shown in FIG.4 and FIG.5, AAA directivity controller 117 is configured to transmit the S-CPICH into four directivity patterns of the twelve directivity patterns simultaneously and shift the transmission direction sequentially with time.

In view of the above configuration, as shown in FIG. 6, destination MS determiner 109 of wireless base station apparatus 100 transmits packet data to a communication terminal such that the directivity pattern of the DSCH is oriented in a different direction than the directivity pattern of the S-CPICH. As a result, the DSCH does not interfere with the S-CPICH, and the communication terminal is capable of accurate channel quality measurement based on the S-CPICH. By this means, priority calculator 108, based on the accurate channel quality, can calculate the priorities in the actual order of good channel quality.

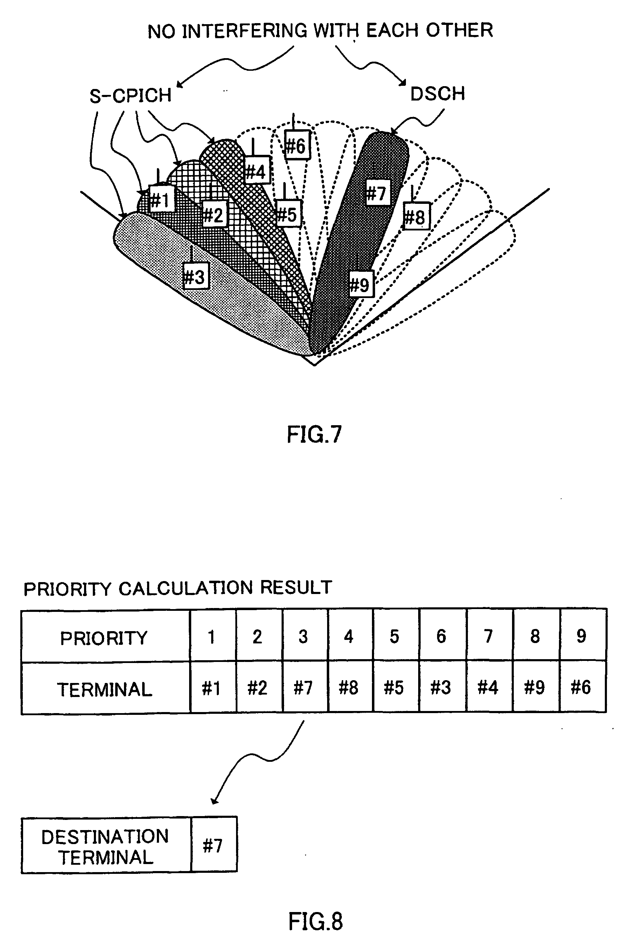

FIG.7 shows a case where there are communication terminals #1 through #9 in a sector. Now, suppose that the S-CPICH is transmitted over the entire cell and the priorities are obtained as shown in FIG.8(A). That is, priority calculator puts the CIR's of the S-CPICH's from the communication terminals in descending order, these come out in the order shown as FIG. 8 (A) . Wireless base station apparatus 100 transmits packet data using the DSCH following this priority order. The S-CPICH requires constant channel quality check and so is transmitted constantly in some directivity pattern while the DSCH is being transmitted.

When the S-CPICH is transmitted in order from the directions including communication terminals #1-#3, as for the DSCH, considering the priorities shown in FIG.8 (A), the directivity should be formed first in the direction of communication terminal #1. However, if the DSCH is transmitted in the direction of communication terminal #1, the S-CPICH will be interfered and the channel quality of communication terminals #1 and #2 will suffer.

Consequently, the wireless base station apparatus, as shown in FIG.7 and FIG.8(B), directionally transmits the DSCH beginning with communication terminal #7, which is at the remotest position from the directional pattern in which the S-CPICH is currently being transmitted and which has the highest priority.

The above configuration makes it possible to prevent interference from the DSCH to the S-CPICH by setting the directivity pattern of the DSCH in a different direction than the directivity pattern of the S-CPICH, so as to enable accurate channel quality measurement based on the S-CPICH.

### (Second Embodiment)

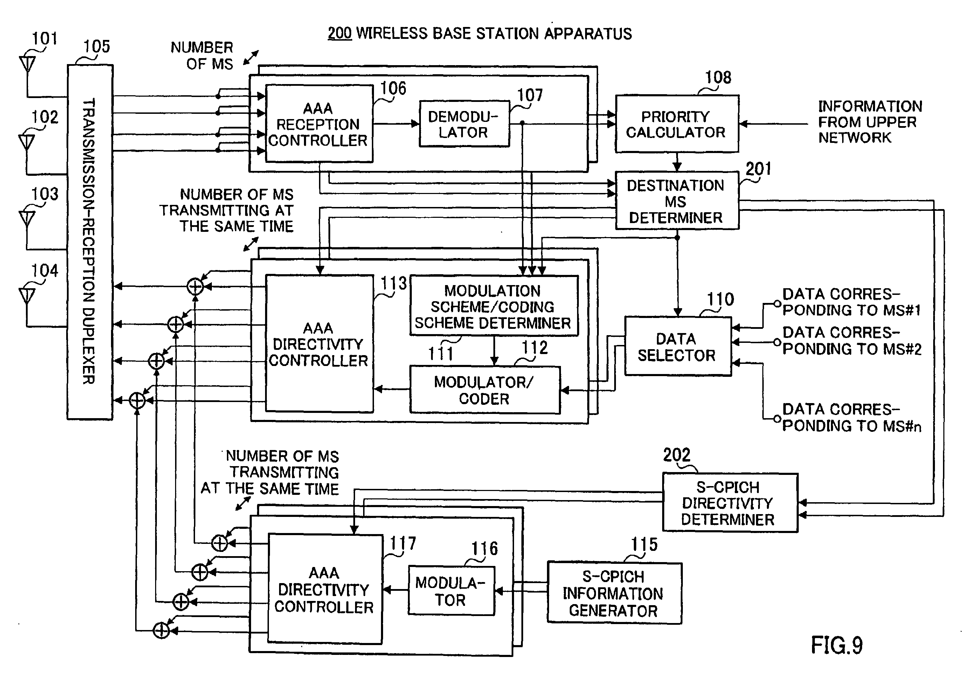

Referring to FIG.9, in which the parts that are identical to those of FIG.2 are assigned the same numerals, 200 shows an overall configuration of a wireless communication apparatus according to a second embodiment of the present invention. Wireless base station apparatus 200 has an identical configuration with wireless base station apparatus of the first embodiment except that it is configured to control the directivity pattern of the S-CPICH in such a way that avoids the directivity pattern of the DSCH, in contrast to wireless base station apparatus 100 of the first embodiment, which is configured to control the directivity pattern of the DSCH in such a way that avoids the directivity pattern of the S-CPICH.

That is, destination MS determiner 201 of wireless base station apparatus 200 directionally transmits the DSCH sequentially, following the exact order of priority obtained from priority calculator 108. Moreover, priority information from destination MS determiner 201 is transmitted to S-CPICH directivity determiner 202. S-CPICH determiner 202 makes reference to the priority information and performs scheduling in such a way that at any given point in time the directivity pattern of the S-CPICH is oriented in a different direction than the directivity pattern in which the DSCH is transmitted.

Similar to the first embodiment, the above configuration makes it possible to prevent the DSCH from interfering with the S-CPICH, thereby enabling accurate channel quality measurement. Also, the advantage compared to the first embodiment is that packet data can be transmitted without changing the priority order as originally determined by priority calculator 108.

### (Third Embodiment)

A feature of the wireless base station apparatus according to this embodiment is to determine such directivity patterns that the S-CPICH and the DSCH do not interfere with each other based on the directivity gain attenuation level of the S-CPICH and the DSCH.

That is, although the first embodiment and the second embodiment are configured to simply control the directivity patterns of the S-CPICH and the DSCH are in such a way that the directivity pattern of the S-CPICH and the directivity pattern of the DSCH are oriented in different directions, the present embodiment is configured to control the directivity patterns of the S-CPICH and the DSCH based on the directivity gain attenuation level such that the S-CPICH and the DSCH do not substantially interfere with each other.

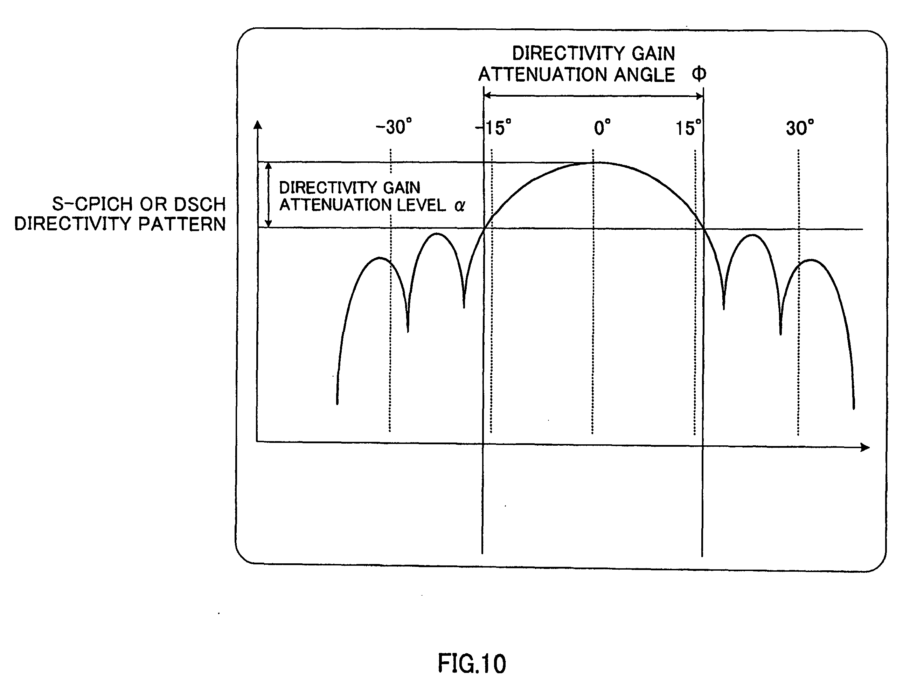

FIG.10 shows a directivity pattern of the S-CPICH or the DSCH transmitted from a wireless base station apparatus. In FIG.10, the horizontal axis is the angle, wherein the direction where the communication terminal to which transmission is currently directed lies is 0° , and the vertical axis is the directivity gain. The directivity gain attenuation level α in FIG.10 is an ignorable attenuation level; when a transmission signal from the communication terminal at the 0° position is seen as an interference element to another communication terminal, said another communication terminal can ignore the impact of this interference at this attenuation level.

Once this directivity gain attenuation level α for ignoring the interference to another communication terminal is determined, as long as the directivity pattern is set, it is possible to determine at how from the directivity pattern the impact of interference can be ignored. This angle is called the directivity gain attenuation angle.

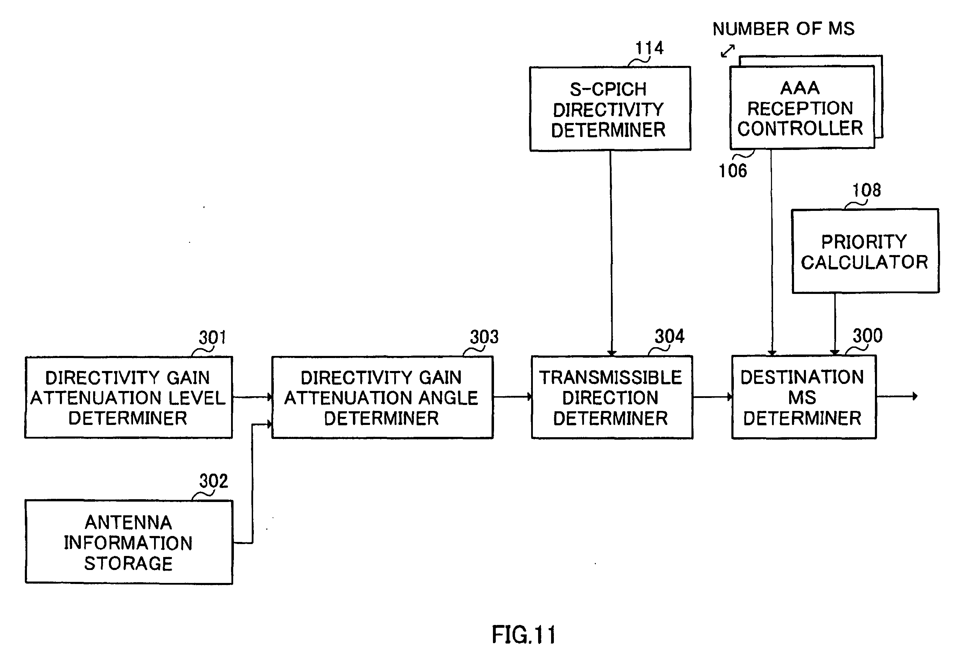

FIG.11 shows a simplified configuration that determines directivity patterns in such a way that the S-CPICH and the DSCH do not interference with each other, based on the directivity gain attenuation level of the S-CPICH and the DSCH. In directivity gain attenuation level determiner 301, the directivity gain attenuation level α of FIG.10 is determined. This directivity gain attenuation level α may be set by the operator on a per apparatus basis or may be prestored. In antenna information storage 302, directivity patterns such as shown in FIG.10 are stored based on the installation condition and transmission power of the antennas.

In directivity gain attenuation angle determiner 303, as shown in FIG. 10, the directivity gain attenuation angle φ is determined from the intersection point of the directivity pattern and the directivity gain attenuation level. This directivity gain attenuation angle φ is sent to transmissible direction determiner 304.

Transmissible direction determiner 304 determines as a transmissible direction the directivity pattern of the S-CPICH determined by S-CPICH directivity determiner 114 excluding the range of the directivity gain attenuation angle φ, and reports this direction to destination MS determiner 300.

Destination MS determiner 300 is aware of each communication terminal's position based on information from AAA reception controller 106. In addition, destination MS determiner 300 does the scheduling of the DSCH to the communication terminals based on priority information from priority calculator 108. Then, destination MS determiner 300 performs determination processing so as not to transmit the DSCH to the communication terminals within the directivity gain attenuation angle φ from the directivity pattern of the S-CPICH regardless of priority. The determination result obtained from destination MS determiner 300 is transmitted to data selector 110 and modulation scheme/coding scheme determiner 111.

According to the above configuration, directivity patterns are determined based on the directivity gain attenuation level of the S-CPICH and the DSCH in such a way that the S-CPICH and the DSCh do not interfere with each other, so that it is not necessary to separate the directivity patterns of the S-CPICH and the DSCH more than necessary. As a result, it is possible to diversify the combinations of the directivity pattern of the S-CPICH and the directivity pattern of the DSCH.

### (Fourth Embodiment)

A feature of a wireless base station apparatus according to the present embodiment is to group the directivity patterns in such a way that a group contains a number of adjacent directivity patterns, and the directivity patterns of the S-CPICH and the DSCH are formulated such that the directivity pattern of the S-CPICH and the directivity pattern of the DSCH are in different groups.

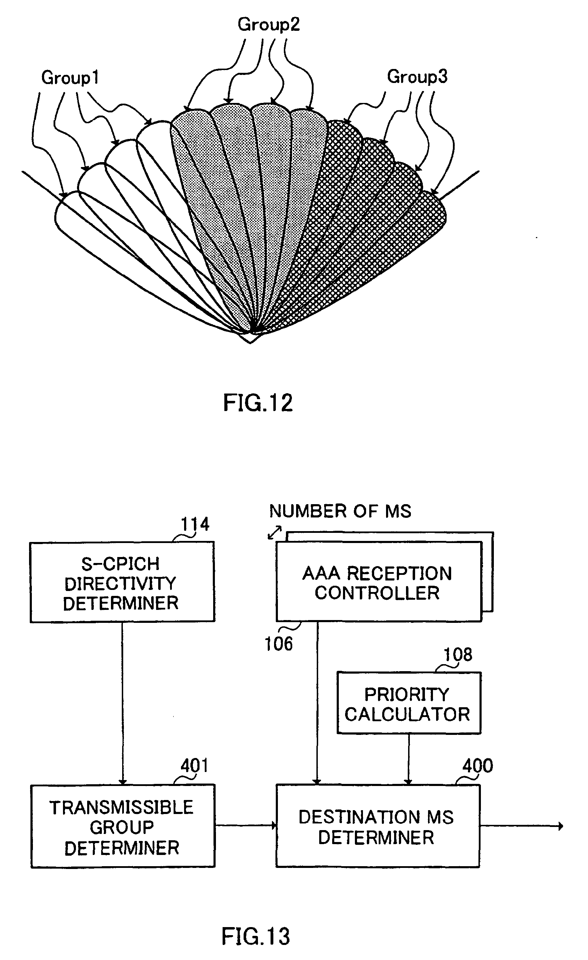

In this embodiment, as shown in FIG.12, one sector is divided into three directivity groups of Groups 1-3. When the directivity pattern of the S-CPICH assumes a position in Group 3, the directivity pattern of the DSCH is controlled to be in either Group 1 or Group 2.

FIG.13 shows a simplified configuration that formulates the directivity pattern of the S-CPICH and the directivity pattern of the DSCH in different groups. Transmissible group determiner 401 detects in which of Groups 1-3 the directivity pattern of the S-CPICH determined by S-CPICH directivity determiner 114 is in, and determines the groups excluding the detected group as DSCH transmissible groups, and reports these groups to determination MS determiner 400.

Transmission MS determiner 400 is aware of each communication terminal's position based on information from AAA reception controller 106. Moreover, based on priority information from priority calculator 108, destination MS determiner 400 does the scheduling of the DSCH to the communication terminals. Then, destination MS determiner 400, if the scheduling is assigned to a communication terminal in a group other than the transmissible groups, the transmission of the DSCH to this communication terminal is held and a determination to send the DSCH to another communication terminal is made. The determination result obtained by destination MS determiner 400 is sent to data selector 110 and modulation scheme/coding scheme determiner 111 of FIG.2.

According to the above configuration, it is possible to achieve the effects of the first and second embodiments by simple processing and configuration.

### (Fifth Embodiment)

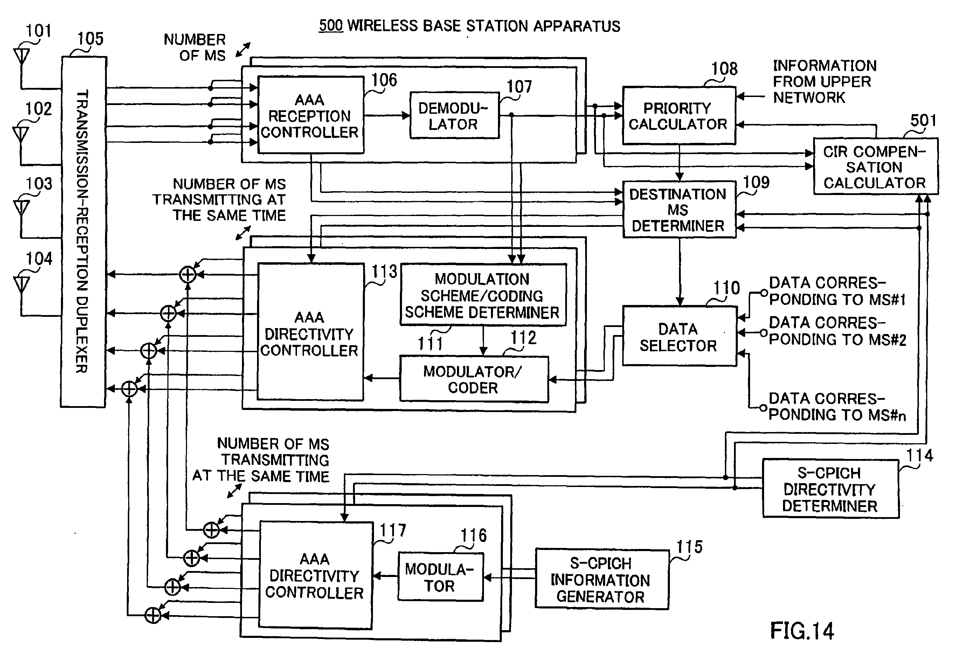

Referring to FIG.14, in which the parts identical to those of FIG.2 are assigned the same numerals, wireless base station apparatus 500 is distinct from the first through fourth embodiments in that AAA directivity controllers 113 and 117 execute such directivity control that allows the directivity pattern of the DSCH and the directivity pattern of the S-CPICH to overlap. In addition, wireless base station apparatus 500 has CIR correction level calculator 501.

Assume a case where communication terminals #1-#7 are provided as shown in FIG.7, and the S-CPICH is transmitted in the directions shown in FIG.7. In this context, if the DSCH is transmitted to communication terminals #1-#3 that lie in the directions where the S-CPICH is transmitted, interference from the S-CPICH deteriorates the CIR of the DSCH. In CIR correction level calculator 501, with regard to a communication terminal in a direction determined by S-CPICH directivity determiner 114, the deterioration level thereof is subtracted from the CIR value obtained from demodulator 107 so as to calculate a correction CIR. The correction CIR is then sent to priority calculator 108.

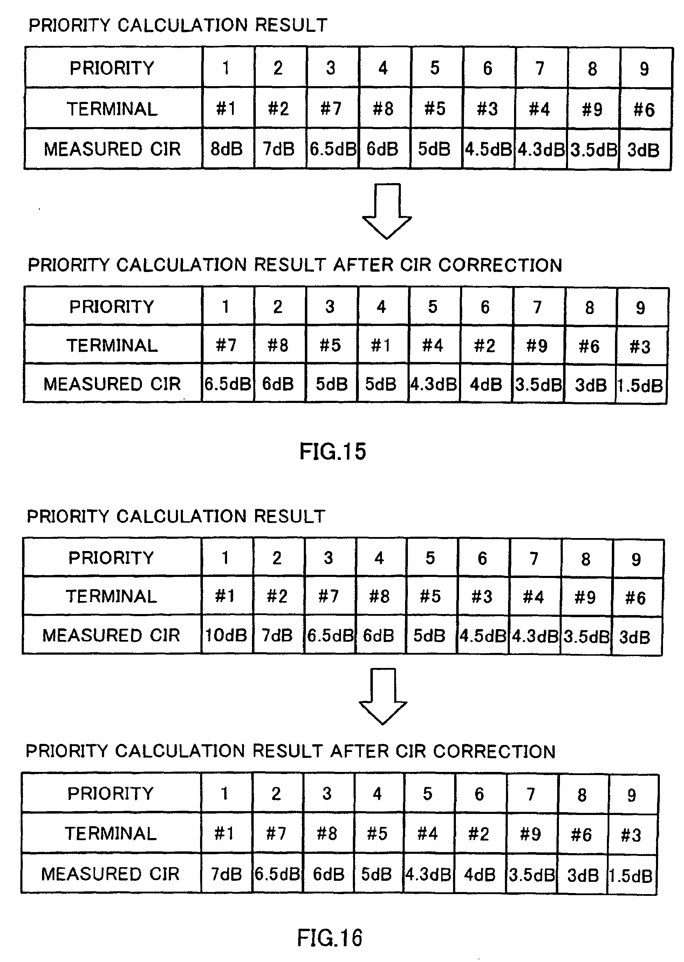

FIG.15 and FIG.16 show examples. Here due to the presence of the S-CPICH, the communication terminals in directions where the S-CPICH is transmitted show a 3dB deterioration of performance. In the example of FIG.15, by a correction of 3dB, the priority of communication terminals #1 and #2 decreases, which if seen on the sole basis of the CIR report value have high priority, and consequently communication terminal #7 becomes the communication terminal of the highest priority. On the other hand, in the example of FIG.16, despite a 3dB correction communication terminal #1 still has the highest CIR, so that communication terminal #1 is the communication terminal of the highest priority.

Consequently, it is possible not only to simply make the directivity pattern of the S-CPICH and the directivity pattern of the DSCH oriented in different directions but also to select the communication terminal truly optimal for transmission of the DSCH.

Although the above embodiment assumes that the communication terminals in directions where the S-CPICH is transmitted receive same interference, the impact varies depending on the propagation environment (e.g., multipath environment). Considering this, it is possible to calculate the CIR correction value on a per communication terminal basis, by reporting the number of multiplaths from the communication terminals, by taking the results in the modulator, and by sending them to the CIR correction level calculator. By this means, it is possible to select a communication terminal that is even more optimal for transmission of the DSCH.

It is equally possible to calculate the interference level at the communication terminal when the S-CPICH is transmitted thereto, and report the result to a base station.

Incidentally, the ratio between the transmission powers of the S-CPICH and the DSCH is necessary to calculate the interference level (i.e., deterioration level), the assumption here is that CIR correction level calculator 501 knows this.

According to the above configuration, a detected channel quality is corrected based on the deterioration level of the channel quality provided that the S-CPICH and the DSCH interfere with each other, and the priority is determined based on information on the corrected channel quality, so that, compared to the case where the directivity pattern of the S-CPICH and the directivity pattern of the DSCH are oriented in different directions, it is possible to select the communication terminal truly optimal for transmission of the DSCH and do the scheduling.

Although the above first through fifth embodiments describes only the cases where, for transmission of the S-CPICH, the number of directivities is 12 and the number of simultaneous transmissions is 4, these can be set at discretion.

Moreover, although the above first though fifth embodiments describe cases where S-CPICH' s of continuous directivities are simultaneously transmitted, it is possible to transmit S-CPICH's of distant directivities simultaneously.

The present invention is by no means limited to the above described embodiments and can be implemented in various forms.

The present invention provides a wireless base station apparatus having a first directional transmitter that directionally transmits a known signal to a plurality of communication terminal apparatuses engaged in communication; a receiver that receives channel quality information from each communication terminal apparatus, the information concerning channel quality at the each communication terminal apparatus upon reception of the known signal; a priority determiner that determines priority in data transmission in descending order of channel quality, based on the channel quality information; a second directional transmitter that directionally transmits packet data to the communication terminal apparatuses following the determined order of priority; and a directivity controller that controls directivity patterns of the first and second directional transmitters such that the directivity pattern formulated by the first directional transmitter and the directivity pattern formulated by the second directional transmitter are oriented in different directions.

According to the above configuration, a signal transmitted from the first directional transmitter receives little inference from a signal transmitted from the second directional transmitter, so that it is possible to accurately determine channel quality at each communication terminal apparatus based on the known signal transmitted from the first directional transmitter. As a result, the report value that indicates channel quality and that is transmitted from each communication terminal apparatus to the base station apparatus reflects the channel quality well, so that the base station apparatus is able to perform scheduling that reflects the channel quality well at improved transmission rates.

The present invention provides a wireless base station apparatus, wherein a directivity controller controls directivity of a first directional transmitter more preferentially than directivity of a second directional transmitter, and controls the directivity of the second directional transmitter such that the directivity of the second directional transmitter is oriented in a different direction than the directivity of the first directional transmitter.

According to the above configuration, interference between a known signal for channel quality measurement and packet data can be minimized while directionally transmitting the known signal for channel quality measurement on a regular basis, and it is possible to maintain equality between communication terminal apparatuses in the cell.

The present invention provides a wireless base station apparatus, wherein a directivity controller controls directivity of a second directional transmitter more preferentially than directivity of a first directional transmitter based on the priority at the priority determiner, and controls the directivity of the first directional transmitter such that the directivity of the first directional transmitter is oriented in a different direction than the directivity of the second directional transmitter.

According to the above configuration, interference between a known signal for channel quality measurement and packet data can be minimized, and it is possible to transmit packet data without changing the order of priority as originally determined by the priority calculator.

The present invention provides a wireless base station apparatus, wherein a directivity controller determines a directivity pattern based on a gain attenuation level of one or both of first and second directional transmitters such that signals from the first and second directional transmitters do not interfere with each other.

According to the above configuration, the directivity pattern of the first directional transmitter and the directivity pattern of the second directional transmitter more need not be separated more than necessary. As a result, it is possible to diversify the combinations of the directivity pattern of the first directional transmitter and the directivity pattern of the second directional transmitter.

The present invention provides a wireless base station apparatus, wherein a directivity controller gathers a plurality of adjacent directivity patterns and groups the directivity patterns as one group, and controls directivity patterns of first and second directional transmitters such that the first directional transmitter and the second directional transmitter formulate directivities in different groups.

According to the above configuration, the directivity of the first directional transmitter and the directivity of the second directional transmitter are simply assigned to different groups, so that it is possible to minimize interference between a known signal for channel quality measurement and packet data by simple processing and configuration.

The present invention provides a wireless base station apparatus having: a first directional transmitter that directionally transmits a known signal to a plurality of communication terminal apparatuses engaged in communication; a receiver that receives channel quality information from each communication terminal apparatus, the information concerning channel quality at the each communication terminal apparatus upon reception of the known signal; a priority determiner that determines priority in data transmission in descending order of channel quality, based on the channel quality information; a second directional transmitter that directionally transmits packet data to the communication terminal apparatuses following the determined order of priority; and a channel quality corrector that calculates an level of attenuation in the channel quality of when the first directional transmitter and the second directional transmitter formulate directivities in overlapping directions by means of the directivity controller and corrects the channel quality based on the level of attenuation, wherein the priority determiner determines priority based on the corrected channel quality obtained by the channel quality corrector.

According to the above configuration, in comparison to the case where the directivity patterns under the first directional transmitter and the directivity patterns under the second directional transmitter are simply oriented in different directions, it is possible to select truly optimal communication terminal apparatuses and schedule transmission of packet data.

The present invention provides a wireless base station apparatus, wherein a channel quality corrector calculates the level of attenuation based on the ratio of transmission power between a first directional transmitter and a second directional transmitter.

The present invention provides a wireless base station apparatus, wherein a channel quality corrector calculates the level of attenuation based on the number of multipaths transmitted from communication terminal apparatuses.

According to the above configurations, it is possible to select truly optimal communication terminal apparatuses more accurately and schedule packet data transmission.

The present invention provides a wireless transmission method comprising: directionally transmitting a known signal to a plurality of communication terminal apparatuses engaged in communication; receiving channel quality information from each communication terminal apparatus, said information concerning channel quality at said each communication terminal apparatus upon reception of the known signal; determining priority in data transmission in descending order of channel quality, based on the channel quality information; directionally transmitting packet data to said communication terminal apparatuses following the determined order of priority; and controlling the directivity patterns such that the directivity pattern of the known signal and the directivity pattern of the packet data are oriented in different directions.

According to the above method, a known signal for channel quality measurement receives little interference from packet data, so that it is possible to accurately determine channel quality at each communication terminal apparatus based on the known signal. As a result, the report value that indicates the channel quality and that is transmitted from each communication terminal apparatus to the base station apparatus reflects the channel quality well, so that the base station apparatus can perform scheduling that reflects the channel quality well at improved transmission rates.

As described above, the present invention is configured to control the directivity pattern of a known signal (e.g., s-CPICH) and packet data (e.g., DSCH) such that the directivity pattern of the known signal and the directivity pattern of the packet data are oriented in different directions, and, when they interfere with each other, take the level of channel deterioration into account, so that, when data packets are transmitted with directivity, it is possible to accurately detect channel quality at each communication terminal apparatus and determine priority in transmission of the data packets based on accurate channel quality information. As a result, it is possible to implement a wireless base station apparatus and a wireless transmission method that enables high speed packet transmission at improved transmission rates.

The present application is based on Japanese patent application No.2002-62129 filed on March 7, 2002, entire content of which is expressly incorporated herein by reference.

### Industrial Applicability

The present invention is suitable for use with a wireless base station apparatus and a wireless communication method for high speed packet transmission.

## Claims

1. A wireless base station apparatus comprising:
a first directional transmitter that directionally transmits a known signal to a plurality of communication terminal apparatuses engaged in communication;
a receiver that receives channel quality information from each communication terminal apparatus, said information concerning channel quality at said each communication terminal apparatus upon reception of the known signal;
a priority determiner that determines priority in data transmission in descending order of channel quality, based on the channel quality information;
asecond directionaltransmitterthatdirectionally transmits packet data to said communication terminal apparatuses following the determined order of priority; and
a directivity controller that controls directivity patterns of the first and second directional transmitters such that the directivity pattern formulated by the first directional transmitter and the directivity pattern formulated by the second directional transmitter are oriented in different directions.

2. The wireless base station apparatus according to claim 1, wherein the directivity controller controls directivity of the first directional transmitter more preferentially than directivity of the second directional transmitter, and controls the directivity of the second directional transmitter such that the directivity of the second directional transmitter is oriented in a different direction than the directivity of the first directional transmitter.

3. The wireless base station apparatus according to claim 1, wherein the directivity controller controls directivity of the second directional transmitter more preferentially than directivity of the first directional transmitter based on the priority at the priority determiner, and controls the directivity of the first directional transmitter such that the directivity of the first directional transmitter is oriented in a different direction than the directivity of the second directional transmitter.

4. The wireless base station apparatus according to claim 1, wherein the directivity controller determines a directivity pattern based on a gain attenuation level of one or both of the first and second directional transmitters such that signals from the first and second directional transmitters do not interfere with each other.

5. The wireless base station apparatus according to claim 1, wherein the directivity controller gathers a plurality of adjacent directivity patterns and groups said directivity patterns as one group, and controls directivity patterns of the first and second directional transmitters such that the first directional transmitter and the second directional transmitter formulate directivities in different groups.

6. A wireless base station apparatus comprising:
a first directional transmitter that directionally transmits a known signal to a plurality of communication terminal apparatuses engaged in communication;
a receiver that receives channel quality information from each communication terminal apparatus, said information concerning channel quality at said each communication terminal apparatus upon reception of the known signal;
a priority determiner that determines priority in data transmission in descending order of channel quality, based on the channel quality information;
a second directional transmitter that directionally transmits packet data to said communication terminal apparatuses following the determined order of priority; and
a channel quality corrector that calculates an level of attenuation in the channel quality of when the first directional transmitter and the second directional transmitter formulate directivities in overlapping directions by means of the directivity controller, and corrects the channel quality based on said level of attenuation,
wherein the priority determiner determines priority based on the corrected channel quality obtained by the channel quality corrector.

7. The wireless base station apparatus according to claim 6, wherein the channel quality corrector calculates the level of attenuation based on a ratio of transmission power between the first directional transmitter and the second directional transmitter.

8. The wireless base station apparatus according to claim 6, wherein the channel quality corrector calculates the level of attenuation based on the number of multipaths transmitted from the communication terminal apparatuses.

9. A wireless transmission method comprising:
directionally transmitting a known signal to a plurality of communication terminal apparatuses engaged in communication;
receiving channel quality information from each communication terminal apparatus, said information concerning channel quality at said each communication terminal apparatus upon reception of the known signal;
determining priority in data transmission in descending order of channel quality, based on the channel quality information;
directionally transmitting packet data to said communication terminal apparatuses following the determined order of priority; and
controlling the directivity patterns such that the directivity pattern of the known signal and the directivity pattern of the packet data are oriented in different directions.
